Europäisches Patentamt

European Patent Office

Office européen des brevets

(11) Veröffentlichungsnummer : **0 392 165 B1**

(12) **EUROPÄISCHE PATENTSCHRIFT**

(45) Veröffentlichungstag der Patentschrift :
**07.04.93 Patentblatt 93/14**

(21) Anmeldenummer : **90103183.1**

(22) Anmeldetag : **20.02.90**

(51) Int. Cl.⁵ : **B60K 28/16**

(54) Verfahren zur Regelung einer querdynamischen Zustandsgrösse eines Kraftfahrzeuges.

(30) Priorität : **12.04.89 DE 3912045**

(43) Veröffentlichungstag der Anmeldung :
**17.10.90 Patentblatt 90/42**

(45) Bekanntmachung des Hinweises auf die
Patenterteilung :
**07.04.93 Patentblatt 93/14**

(84) Benannte Vertragsstaaten :
**DE FR GB IT SE**

(56) Entgegenhaltungen :
**EP-A- 0 240 174**
**DE-A- 3 545 715**

(56) Entgegenhaltungen :
**DE-A- 3 545 716**
**DE-A- 3 546 571**
**DE-A- 3 606 797**
**DE-A- 3 635 095**

(73) Patentinhaber : **Bayerische Motoren Werke
Aktiengesellschaft
Patentabteilung AJ-30 Postfach 40 02 40
Petuelring 130
W-8000 München 40 (DE)**

(72) Erfinder : **Mitschke, Manfred, Prof. Dr.-Ing.
Alter Rautheimer Weg 38
W-3300 Braunschweig (DE)**
Erfinder : **Schwartz, Ekkehard
Schertlinstrasse 11 1/140
W-8900 Augsburg (DE)**

EP 0 392 165 B1

**Beschreibung**

Die Erfindung betrifft ein Verfahren zur Regelung einer querdynamischen Zustandsgröße eines Kraftfahrzeuges zur Einhaltung eines stabilen Fahrzustandes, bei dem die jeweiligen Werte für den Lenkwinkel, die Fahrgeschwindigkeit sowie die Gierwinkelgeschwindigkeit gemessen bzw. ermittelt werden, bei dem in Abhängigkeit vom Lenkwinkel und von der Fahrgeschwindigkeit anhand eines mathematischen Fahrzeugreferenzmodells eine Referenz- oder Soll-Gierwinkelgeschwindigkeit bestimmt wird und bei dem die Differenz zwischen der tatsächlichen Gierwinkelgeschwindigkeit des Fahrzeuges und der Referenz- oder Soll-Gierwinkelgeschwindigkeit ermittelt wird.

Eine Einrichtung zur Durchführung eines derartigen Verfahrens ist bereits aus der DE-OS 35 45 715 bekannt. Bei der bekannten Einrichtung zur Regelung einer querdynamischen Zustandsgröße eines Kraftfahrzeuges, nämlich der Gierwinkelgeschwindigkeit des Kraftfahrzeuges ist jeweils eine Vorrichtung zur Ermittlung der Fahrgeschwindigkeit, des Lenkwinkels sowie der Gierwinkelgeschwindigkeit vorgesehen. Ferner enthält die bekannte Einrichtung eine Regelungseinheit in Form einer Elektronikeinheit mit einer Recheneinheit, die in Abhängigkeit vom Lenkwinkel und der Fahrgeschwindigkeit des Fahrzeuges ein Ausgangssignal für einen Sollwert oder für Toleranzgrenzwerte der Gierwinkelgeschwindigkeit erzeugt. Die Elektronikeinheit enthält ferner eine Vergleichseinheit, in der die Differenz zwischen der tatsächlichen Gierwinkelgeschwindigkeit des Fahrzeuges und dem Sollwert bzw. den Toleranzgrenzwerten der Gierwinkelgeschwindigkeit ermittelt wird. Diese Vergleichseinheit bildet daraus ein Eingangssignal für einen Regler, der Steuersignale beispielsweise für die Bremsen des Fahrzeuges und/oder für ein Leistungsstellglied des Fahrzeugmotors abgibt.

Da bei der bekannten Einrichtung der Sollwert bzw. die Toleranzgrenzwerte der Gierwinkelgeschwindigkeit konstant sind, werden bei einem Fahrbahnbelag mit einem hohen Reibwert bereits Steuersignale erzeugt, wenn das Fahrzeug noch weit entfernt ist von einem querdynamisch kritischen Fahrzustand, während bei einem Fahrbahnbelag mit einem niedrigen Reibwert selbst bei Überschreiten der Haftgrenze zwischen den Fahrzeugreifen und dem Fahrbahnbelag noch keine Steuersignale im Sinne einer Einhaltung eines stabilen Fahrzustandes des Fahrzeuges erzeugt werden.

Es ist daher Aufgabe der Erfindung, ein Verfahren eingangs genannter Art anzugeben, bei dem unabhängig vom Fahrbahnbelag Steuersignale zur Einhaltung eines stabilen Fahrzustandes des Fahrzeuges immer dann erzeugt werden, wenn das Fahrzeug einen querdynamisch kritischen Fahrzustand erreicht hat.

Diese Aufgabe wird erfindungsgemäß dadurch gelöst, daß die Gierwinkelgeschwindigkeitsdifferenz zur Bildung des Reglereingangssignals mit einem von der Querbeschleunigung des Fahrzeuges abhängigen Schwellwert verglichen wird.

Dadurch, daß beim erfindungsgemäßen Verfahren der Schwellwert für die Gierwinkelgeschwindigkeitsdifferenz nicht konstant ist, sondern von der Querbeschleunigung des Fahrzeuges abhängt, wird er stets so variiert, daß bei Überschreiten des Schwellwertes durch die Gierwinkelgeschwindigkeitsdifferenz unabhängig vom Reibwert und damit vom Zustand der Fahrbahn jeweils die sog. bezogene Querbeschleunigung $\ddot{y}_{zul.}/\ddot{y}_{max.}$ vorliegt, wobei $\ddot{y}_{zul.}$ die jeweils zulässige Querbeschleunigung und $\ddot{y}_{mwax.}$ die für den jeweiligen Reibwert zwischen den Fahrzeugreifen und der Fahrbahn maximal erreichbare Querbeschleunigung $\ddot{y}$ bezeichnet. Da das Erreichen der sog. bezogenen Querbeschleunigung $\ddot{y}_{zul.}/\ddot{y}_{max.}$ unabhängig vom jeweiligen Reibwert zwischen den Fahrzeugreifen und der Fahrbahn stets das Erreichen eines querdynamisch kritischen Fahrzustandes des Fahrzeuges kennzeichnet, wird durch die erfindungsgemäße Festlegung des Schwellwertes für die Gierwinkelgeschwindigkeitsdifferenz in Abhängigkeit von der Querbeschleunigung des Fahrzeuges erreicht, daß unabhängig vom Reibwert zwischen den Fahrzeugreifen und der Fahrbahn, d. h. unabhängig vom Fahrbahnzustand Steuersignale, beispielsweise für die Bremsen des Fahrzeuges und/oder für ein Leistungsstellglied des Fahrzeugmotors immer genau dann erzeugt werden, wenn das Fahrzeug gerade einen querdynamisch kritischen Fahrzustand erreicht. Es ist damit gewährleistet, daß beispielsweise bei einem Fahrbahnbelag mit einem großen Reibwert nicht schon bereits Steuersignale erzeugt werden, wenn dies noch gar nicht erforderlich ist. Ferner wird durch das erfindungsgemäße Verfahren erreicht, daß bei einem Fahrbahnbelag mit einem sehr kleinen Reibwert, beispielsweise bei vereister Fahrbahn nicht erst dann Steuersignale erzeugt werden, wenn bereits die für diesen Reibwert zulässige Querbeschleunigung des Fahrzeuges überschritten ist, d. h., plastisch ausgedrückt, wenn das Fahrzeug bereits "unfreiwillig" die Fahrbahn verlassen hat.

Bei einer Weiterbildung der Erfindung wird ein Äquivalent für die Querbeschleunigung des Fahrzeuges und damit der von der Querbeschleunigung des Fahrzeuges abhängige Schwellwert für die Gierwinkelgeschwindigkeitsdifferenz anhand des Lenkwinkels und der Fahrgeschwindigkeit des Fahrzeuges ermittelt. Auf diese Weise läßt sich der jeweilige Schwellwert für die Gierwinkelgeschwindigkeitsdifferenz zumindest bei stationären Fahrzuständen und bei niedrigen bezogenen Querbeschleunigungen ($\ddot{y}/\ddot{y}_{max.} < 0{,}5$) auf einfache Weise bestimmen.

Ferner werden bei einer weiteren Ausgestaltung des erfindungsgemäßen Verfahrens die Winkelgeschwindigkeiten der nichtangetriebenen Räder des Fahrzeuges gemessen und daraus die Fahrgeschwindigkeit und-/oder die Gierwinkelgeschwindigkeit berechnet. Da die Winkelgeschwindigkeiten der nichtangetriebenen Räder mit nur sehr geringem Aufwand sehr genau gemessen werden können, kann auf diese Weise auch die Fahrgeschwindigkeit und/oder die Gierwinkelgeschwindigkeit in einfacher Weise bestimmt werden.

Im folgenden wird die Erfindung anhand eines Ausführungsbeispieles näher erläutert.

Es zeigen:

Fig. 1    ein Blockschaltbild einer nach dem erfindungsgemäßen Verfahren arbeitenden Regeleinrichtung und

Fig. 2    ein Kurvendiagramm zur Erläuterung der Funktionsweise der Regeleinrichtung von Fig. 1.

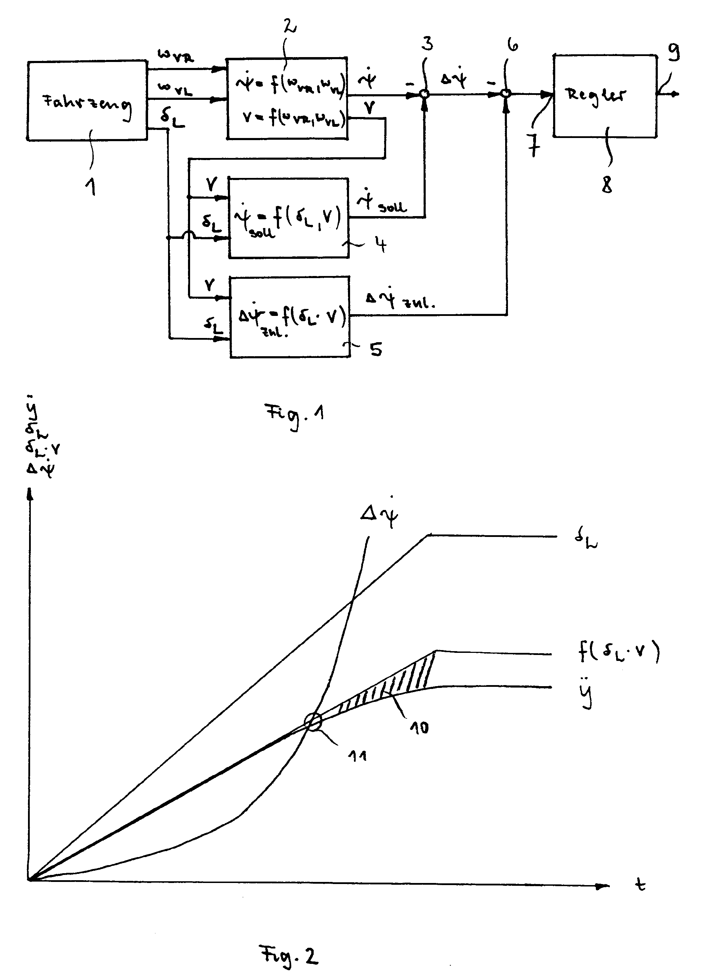

Bei dem in Fig. 1 dargestellten Blockschaltbild stellt der Block 1 das Fahrzeug dar. Am Fahrzeug 1 werden die Winkelgeschwindigkeiten $\omega_{VR}$ und $\omega_{VL}$ der nichtangetriebenen Vorderräder auf an sich bekannte Weise gemessen und einer ersten Berechnungseinheit 2 zugeführt. In dieser ersten Berechnungseinheit 2 wird aus den Winkelgeschwindigkeiten $\omega_{VR}$ und $\omega_{VL}$ der beiden nichtangetriebenen Fahrzeugräder und dem dynamischen Radhalbmesser $r_{dyn.}$ die Fahrgeschwindigkeit V des Fahrzeuges gemäß der Formel

$$V = \frac{(\omega_{VR} + \omega_{VL}) \cdot V_{dyn.}}{2}$$

berechnet. Ferner wird in dieser ersten Berechnungseinheit 2 aus den Winkelgeschwindigkeiten $\omega_{VR}$ und $\omega_{VL}$, dem dynamischen Radhalbmesser $r_{dyn.}$ und der Spurweite $s_V$ der Achse der nichtangetriebenen Räder des Fahrzeuges die Gierwinkelgeschwindigkeit $\dot{\psi}$ gemäß der Formel

$$\dot{\psi} = \frac{(\omega_{VR} - \omega_{VL}) \cdot V_{dyn}}{S_V}$$

berechnet.

Während die berechnete Gierwinkelgeschwindigkeit $\dot{\psi}$ dem invertierenden Eingang einer ersten Summationsstelle 3 zugeführt wird, wird die in der ersten Berechnungseinheit 2 berechnete Fahrgeschwindigkeit des Fahrzeuges einer zweiten Berechnungseinheit 4 und einer dritten Berechnungseinheit 5 zugeführt. Der zweiten Berechnungseinheit 4 und der dritten Berechnungseinheit 5 werden darüber hinaus jeweils noch der am Fahrzeug 1 gemessene Lenkwinkel $\delta_L$ zugeführt. In der zweiten Berechnungseinheit 4 wird dann in Abhängigkeit von der in der ersten Berechnungseinheit 2 berechneten Fahrgeschwindigkeit V des Fahrzeuges und dem am Fahrzeug 1 gemessenen Lenkwinkel $\delta_L$ anhand eines mathematischen Fahrzeugreferenzmodells eine Referenz- oder Soll-Gierwinkelgeschwindigkeit $\dot{\psi}_{soll}$ bestimmt. Diese Referenz- oder Soll-Gierwinkelgeschwindigkeit $\dot{\psi}_{soll}$ wird dem positiven Eingang der ersten Summationsstelle 3 zugeführt. Am Ausgang der ersten Summationsstelle 3 erscheint dann die Gierwinkelgeschwindigkeitsdifferenz $\Delta\dot{\psi}$ zwischen der tatsächlichen Gierwinkelgeschwindigkeit $\dot{\psi}$ des Fahrzeuges und der Referenz- oder Soll-Gierwinkelgeschwindigkeit $\dot{\psi}_{soll}$. Diese Gierwinkelgeschwindigkeitsdifferenz $\Delta\dot{\psi}$ wird dann dem invertierenden Eingang einer zweiten Summationsstelle 6 zugeführt.

In der dritten Berechnungseinheit 5 wird in Abhängigkeit von der in der ersten Berechnungseinheit 2 berechneten Fahrgeschwindigkeit V des Fahrzeuges und dem am Fahrzeug gemessenen Lenkwinkel $\delta_L$ der Schwellwert $\Delta\dot{\psi}_{zul.}$ der Gierwinkelgeschwindigkeitsdifferenz berechnet. Ein auf diese Weise berechneter Schwellwert $\Delta\dot{\psi}_{zul.}$ für die Gierwinkelgeschwindigkeitsdifferenz $\Delta\dot{\psi}$ ist von der Querbeschleunigung $\ddot{y}$ des Fahrzeuges abhängig. Diese Art der Berechnung des Schwellwertes $\Delta\dot{\psi}_{zul.}$ der Gierwinkelgeschwindigkeitsdifferenz $\Delta\dot{\psi}$ in Abhängigkeit von der Fahrgeschwindigkeit des Fahrzeuges und dem am Fahrzeug gemessenen Lenkwinkel $\delta_L$ wird einer Berechnung des Schwellwertes $\Delta\dot{\psi}_{zul.}$ in Abhängigkeit von der am Fahrzeug gemessenen Querbeschleunigung $\ddot{y}$ vorgezogen, da die Fahrgeschwindigkeit V des Fahrzeuges und der Lenkwinkel $\delta_L$ leichter gemessen werden können als die Querbeschleunigung $\ddot{y}$ des Fahrzeuges. Dieser indirekt von der Querbeschleunigung $\ddot{y}$ des Fahrzeuges und damit von dem jeweiligen Reibwert $\mu$ zwischen den Fahrzeugreifen und der Fahrbahn abhängige Schwellwert $\Delta\dot{\psi}_{zul.}$ für die Gierwinkelgeschwindigkeitsdifferenz $\Delta\dot{\psi}$ wird dem positiven Eingang der zweiten Summationsstelle 6 zugeführt. In dieser wird die Gierwinkelgeschwindigkeitsdifferenz $\Delta\dot{\psi}$ mit dem vom Reibwert $\mu$ zwischen den Fahrzeugreifen und der Fahrbahn abhängigen Schwellwert $\Delta\dot{\psi}_{zul.}$ für die Gierwinkelgeschwindigkeitsdifferenz $\Delta\dot{\psi}$ verglichen. In Abhängigkeit vom Vergleichssignal wird der Eingang 7 eines Reglers 8 angesteuert. Am Ausgang 9 des Reglers 8 erscheinen dann Steuersignale beispielsweise für die Bremsen des Fahrzeuges und/oder für ein Leistungsstellglied des Fahrzeugmotors.

Wenn gemäß dem erfindungsgemäßen Verfahren der Schwellwert $\Delta\dot{\psi}_{zul.}$ für die Gierwinkelgeschwindigkeitsdifferenz $\Delta\dot{\psi}$ in Abhängigkeit von dem Produkt aus Lenkwinkel $\delta_L$ und Fahrgeschwindigkeit V des Fahrzeuges und damit indirekt in Abhängigkeit von der Querbeschleunigung $\ddot{y}$ des Fahrzeuges variiert wird, dann überschreitet die Gierwinkelgeschwindigkeitsdifferenz $\Delta\dot{\psi}$ den Schwellwert $\Delta\dot{\psi}_{zul.}$ unabhängig vom Reibwert zwischen den Fahrzeugreifen und der Fahrbahn immer dann, wenn das Fahrzeug im Hinblick auf seinen Fahrzustand gerade seinen Grenzbereich erreicht. Damit ist gewährleistet, daß der Regler 8 unabhängig vom Reib-

EP 0 392 165 B1

wert zwischen den Fahrzeugreifen und der Fahrbahn immer genau zum richtigen Zeitpunkt, nämlich dann wenn der Fahrzustand des Fahrzeuges gerade den Grenzbereich erreicht, Steuersignale, beispielsweise für die Bremsen des Fahrzeuges und/oder für ein Leistungsstellglied des Fahrzeugmotors abgibt.

Da das mathematische Referenzfahrzeugmodell im in Abhängigkeit vom Reibwert zwischen den Fahrzeugreifen und der Fahrbahn relativ niedrigen Querbeschleunigungsbereich sehr gut mit dem tatsächlichen Fahrzeugverhalten übereinstimmt, im relativ oberen Querbeschleunigungsbereich dagegen eine zunehmend größere Abweichung auftritt, nimmt die Gierwinkelgeschwindigkeitsdifferenz $\Delta\dot{\psi}$ zwischen der tatsächlichen Gierwinkelgeschwindigkeit $\dot{\psi}$ des Fahrzeuges und der Referenz- oder Soll-Gierwinkelgeschwindigkeit $\dot{\psi}_{soll}$ mit zunehmendem Lenkwinkel $\delta_L$ und damit auch zunehmender Querbeschleunigung $\ddot{y}$ progressiv zu. Da die Querbeschleunigung $\ddot{y}$ des Fahrzeuges mit zunehmendem Lenkwinkel $\delta_L$ lediglich degressiv zunimmt, wird die Gierwinkelgeschwindigkeitsdifferenz $\Delta\dot{\psi}$ bei Erreichen des in der Fig. 2 schraffiert dargestellten Grenzbereichs des Fahrzustandes des Fahrzeuges die Querbeschleunigungskurve $\ddot{y}$ schneiden. Bei Erreichen dieses Schnittpunktes 10 wird der Regler 8 (Fig. 1) im Sinne einer Beibehaltung eines stabilen Fahrzustandes aktiviert. Wie der Fig. 2 ferner zu entnehmen ist, stellt die Funktion f $(\delta_L \cdot V)$ zumindest für stationäre Fahrzustände und niedrige bezogene Querbeschleunigungen ($\ddot{y}/\ddot{y}_{max} < 0,5$) eine gute Näherung für die Querbeschleunigung $\ddot{y}$ des Fahrzeuges dar. Da der Lenkradwinkel $\delta_L$ und die Fahrgeschwindigkeit V des Fahrzeuges wesentlich leichter gemessen werden können als die Querbeschleunigung $\ddot{y}$ des Fahrzeuges, wird der Schwellwert $\Delta\dot{\psi}_{zul.}$ für die Gierwinkelgeschwindigkeitsdifferenz $\Delta\dot{\psi}$ nicht unmittelbar in Abhängigkeit von einem etwaigen Meßwert für die Querbeschleunigung $\ddot{y}$ des Fahrzeuges, sondern in Abhängigkeit von der Fahrgeschwindigkeit V des Fahrzeuges und vom Lenkradwinkel $\delta_L$ und damit indirekt in Abhängigkeit von der Querbeschleunigung $\ddot{y}$ des Fahrzeuges bestimmt.

## Patentansprüche

1. Verfahren zur Regelung einer querdynamischen Zustandsgröße eines Kraftfahrzeuges zur Einhaltung eines stabilen Fahrzustandes, bei dem die jeweiligen Werte für den Lenkwinkel, die Fahrgeschwindigkeit sowie die Gierwinkelgeschwindigkeit gemessen bzw. ermittelt werden, bei dem in Abhängigkeit vom Lenkwinkel und von der Fahrgeschwindigkeit anhand eines mathematischen Fahrzeugreferenzmodells eine Referenz- oder Soll-Gierwinkelgeschwindigkeit bestimmt wird und bei dem die Differenz zwischen der tatsächlichen Gierwinkelgeschwindigkeit des Fahrzeuges und der Referenz- oder Soll-Gierwinkelgeschwindigkeit ermittelt wird, dadurch gekennzeichnet, daß die Gierwinkelgeschwindigkeitsdifferenz ($\Delta\dot{\psi}$) zur Bildung des Reglereingangssignals mit einem von der Querbeschleunigung des Fahrzeuges abhängigen Schwellwert ($\Delta\dot{\psi}_{zul.}$) verglichen wird.

2. Verfahren nach Anspruch 1, dadurch gekennzeichnet, daß ein Äquivalent für die Querbeschleunigung des Fahrzeuges und damit der von der Querbeschleunigung des Fahrzeuges abhängige Schwellwert ($\Delta\dot{\psi}_{zul.}$) der Gierwinkelgeschwindigkeitsdifferenz anhand des Lenkwinkels ($\delta_L$) und der Fahrgeschwindigkeit (V) des Fahrzeuges ermittelt wird.

3. Verfahren nach Anspruch 1 oder 2, dadurch gekennzeichnet, daß die winkelgeschwindigkeiten ($\omega_{VR}, \omega_{VL}$) der nichtangetriebenen Räder des Fahrzeuges gemessen und daraus die Fahrgeschwindigkeit (V) und/oder die Gierwinkelgeschwindigkeit ($\dot{\psi}$) berechnet werden.

## Claims

1. A method of controlling a transverse dynamic variable of state of a motor vehicle so as to maintain a stable driving state, in which the respective values for the steering angle, the speed of travel and the yawing angle speed are measured of calculated, a reference or set yawing-angle speed is determined in dependence on the steering angle and the speed of travel using a mathematical vehicle reference model, and the difference between the actual yawing-angle speed of the vehicle and the reference or set yawing-angle speed is calculated, characterised in that the yawing-angle speed difference ($\Delta\dot{\psi}$) for forming the controller input signal is compared with a threshold value ($\Delta\dot{\psi}_{zul.}$) depending on the transverse acceleration of the vehicle.

**2.** A method according to claim 1, characterised in that an equivalent of the transverse acceleration of the vehicle and consequently of the threshold value ($\Delta\dot{\psi}_{zul.}$) of the yawing angle speed difference depending on the transverse acceleration of the vehicle is calculated from the steering angle ($\delta_L$) and the travelling speed (V) of the vehicle.

**3.** A method according to claim 1 or 2, characterised in that the angular velocities ($\omega_{VR}$, $\omega_{VL}$) of the non-driven wheels of the vehicle are measured and used to calculate the travelling speed (V) and/or the yawing-angle speed ($\dot{\psi}$).

**Revendications**

**1.** Procédé pour régler une grandeur d'état dynamique transversal d'un véhicule à moteur pour maintenir un état de marche stable, dans lequel on mesure ou on détecte les valeurs respectives de l'angle de braquage, de la vitesse de marche ainsi que de la vitesse angulaire d'embardée, dans lequel on détermine en fonction de l'angle de braquage et de la vitesse de marche, à partir d'un modèle de référence mathématique du véhicule, une vitesse angulaire d'embardée de référence ou de consigne et dans lequel on détecte la différence entre la vitesse angulaire d'embardée effective du véhicule et la vitesse angulaire d'embardée de référence ou de consigne, procédé caractérisé en ce que la différence de vitesse angulaire d'embardée ($\Delta\dot{\psi}$) est comparée pour la formation du signal d'entrée du régulateur à une valeur de seuil ($\Delta\dot{\psi}_{zul.}$) fonction de l'accélération transversale du véhicule.

**2.** Procédé selon la revendication 1, caractérisé en ce qu'on détecte un équivalent de l'accélération transversale du véhicule et de cette façon de la valeur de seuil, fonction de l'accélération transversale du véhicule ($\Delta\dot{\psi}_{zul.}$) de la différence de vitesse angulaire d'embardée à partir de l'angle de braquage ($\delta_L$) et de la vitesse de marche (V) du véhicule.

**3.** Procédé selon la revendication 1 ou 2, caractérisé en ce qu'on mesure les vitesses angulaires ($\omega_{VR}$, $\omega_{VL}$) des roues non motrices du véhicule et à partir de là on calcule la vitesse de marche (V) et/ou la vitesse angulaire d'embardée ($\dot{\psi}$).

Fig. 1

Fig. 2

6